# EUROPEAN PATENT SPECIFICATION

(11) **EP 1 303 802 B1**
(45) Date of publication and mention of the grant of the patent: **16.01.2013**
(21) Application number: 00950637.9
(22) Date of filing: 25.07.2000
(51) Int. Cl.: G06F 1/00, G06F 9/445

(54) **SYSTEM AND METHOD OF VERIFYING THE AUTHENTICITY OF DYNAMICALLY CONNECTABLE EXECUTABLE IMAGES**
SYSTEM UND VERFAHREN ZUR VERIFIKATION DER AUTHENTIZITÄT VON DYNAMISCH VERBINDBAREN AUSFÜHRBAREN BILDER
SYSTEME ET PROCEDE POUR LA VERIFICATION DE L'AUTHENTICITE D'IMAGES EXECUTABLES A CONNEXION DYNAMIQUE

(43) Date of publication of application: 23.04.2003
(73) Proprietor: Rovi Solutions Corporation, Santa Clara, CA 95050 (US)
(72) Inventor: BODROV, Dmitry, San Diego, CA 92130 (US)
(74) Representative: Needle, Jacqueline
(86) International application number: PCT/US2000/020182
(87) International publication number: WO 2002/008873

(56) References cited:
- EP-A- 0 778 520
- WO-A-00/14631
- US-A- 5 559 884

## Description

The present invention relates to a system and method for determining the authenticity of a program image.

New object models now provide for the dynamic integration of software applications at run time. For example, Windows, an operating system licensed by Microsoft Inc., allows for the dynamic integration of a software application with a dynamic link library during the execution of the software application. Upon a user request for the execution of the software application, a program loader copies a "disk image" of the application from disk storage to main memory to create a "process image". The disk image refers to the executable image before it is loaded, whereas the process image refers to the executable image after it is loaded in memory. Both the disk image and the process image typically include a fix-up section that identifies which portions of the software need to be fixed-up to reference the dynamic link library at run time.

Significantly, after loading, the process image is different to the disk image. As such, a checksum that had been prepared with respect to the disk image would no longer match the checksum of the process image, even if the process image had not been improperly tampered with.

Therefore, there is a need for a system that can verify the identity of a software application in a dynamic loading environment. In particular, the system should be able to determine whether a software application that has been dynamically connected to another data object has been tampered with subsequent to the execution of the software application.

EP 0,778,520 discloses a system and method for executing verifiable programs with facility for using non-verifiable programs from trusted sources. A non-verifiable program is indirectly verifiable by way of a digital signature on the non-verifiable program that proves the program was produced by a trusted source.

WO00/14631 discloses a system for determining the authenticity of a program image having one or more pointers that are in need of fixing up by a program loader, the system comprising a validator arranged to:
generate at a first point in time a reference digital signature based upon a selected content of the program image; and
generate at a second point in time an authenticity digital signature based on said selected content of the program image, wherein the validator is further arranged to compare the reference digital signature with the authenticity digital signature to determine the authenticity of the program image.

It is an object of the present invention to provide an alternative system and method for determining the authenticity of an executable image.

According to a first aspect of the present invention, a system as defined above for determining the authenticity of a program image is characterised in that said selected content of the program image excludes each pointer located within said content that is in need of fixing up by a program loader.

The invention also extends to a method of determining the authenticity of a program image having one or more pointers that are in need of fixing up by a program loader, the method comprising:
at a first point in time generating a first reference digital signature based upon a selected content of the program image,
at a second point in time generating an authenticity digital signature based upon said selected content of the program image; and
comparing the authenticity digital signature with the reference digital signature to determine the authenticity of the program image,
characterised in that the method further comprises:
   identifying pointers within the program image that are in need of fixing up by a program loader; wherein
   the selected content of the program image excludes each pointer located within said content that is in need of fixing up by a program loader.

Embodiments of the present invention will hereinafter be described by way of example with reference to the accompanying drawings, in which:
Figure 1 is a high-level block diagram illustrating a computer of the present invention that is adapted to receive an executable image from one or more sources;
Figure 2 is a block diagram illustrating a validator that is capable of determining the authenticity of one or more executable images that reside on the computer of Figure 1;
Figure 3 is a block diagram illustrating the internal structure of one of the executable images of Figure 2;
Figure 4 is a block diagram illustrating two of the executable images of Figure 2 being linked after a loading process;
Figure 5 is a flowchart illustrating a process performed by the validator of Figure 2 during an authenticity check of one of the executable images shown in Figure 2; and
Figure 6 is a flow chart illustrating another process performed by the validator of Figure 2 during an authenticity check of one of the executable images shown in Figure 2.

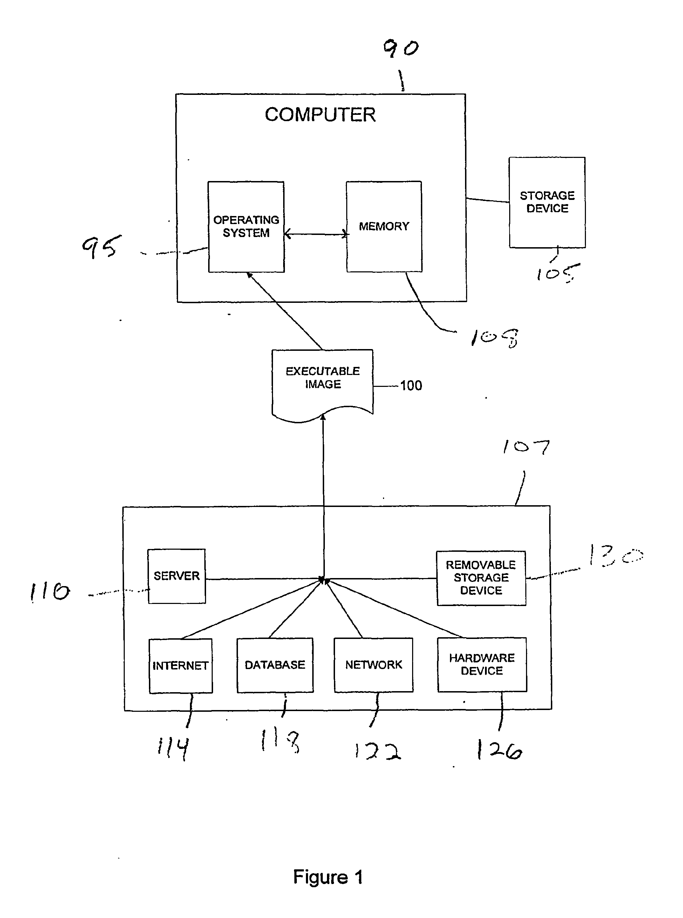

Figure 1 is a high-level block diagram illustrating a computer 90. The computer 90 enables an authenticity check with respect to one or more executable images 100 that are executing on the computer.

The term 'executable image' is used to describe the image 100 throughout the description even though a program image (100) having one or more pointers in need of fixing up by a program loader only becomes executable when the pointers have been fixed up.

The computer 90 may utilize any conventional general purpose single- or multi-chip microprocessor such as a Pentium^{®} processor, a Pentium^{®} Pro processor, a 8051 processor, a MPS^{®} processor, a Power PC^{®} processor, or an ALPHA^{®} processor. In addition, the computer 90 may utilize any conventional special purpose microprocessor such as a digital signal processor or a graphics processor.

The computer 90 includes an operating system 95 and a memory 108. The operating system can be provided by any operating system vendor and can include: UNIX, LINUX, Disk Operating System (DOS), 0S/2, Windows 3.X, Windows 95, Windows 98, and Windows NT. For convenience of description, an embodiment of the invention with respect to Windows 95 is set forth below.

The computer 90 is in communication with one or more executable image sources 107 that provide the executable image 100 to the computer 90. As is shown in Figure 1, exemplary executable image providers include: a server 110, an Internet 114, a database 118, a network 122, a hardware device 126, and/or a removable storage device 130.

The executable image 100 is a data object that can define by itself or in conjunction with other executable images, one or more software applications. The software applications may include, for example: a word processor, a database, a digital rights management system, a personal finance utility, a graphics tool, an Internet browser, a computer game, a communications program, an authorization program, an electronic wallet, a multi-media renderer or a contract manager. Furthermore, the executable image 100 is dynamically connectable with other executable images. For example, in an embodiment of the invention that is developed for use with the Windows 95, the executable image is a dynamic link library (DLL).

The Internet 114 includes network variations such as public internet, a private internet, a secure internet, a private network, a public network, a value-added network, an intranet and the like.

The network 122 may include any type of electronically connected group of computers including, for instance, the following networks: Intranet, Local Area Networks (LAN) or Wide Area Networks (WAN). In addition, the connectivity to the network may be, for example, remote modem, Ethernet (IEEE 802.3), Token Ring (IEEE 802.5), Fiber Distributed Datalink Interface (FDDI) or Asynchronous Transfer Mode (ATM). Note that computing devices may be desktop, server, portable, hand-held, set-top, or any other desired type of configuration. The hardware device 126 can be a logic chip, a ROM, a RAM, a smart card, or a central processing unit. The removable media storage 130 can be a floppy disk, a compact disk, a hard disk, a tape drive, a ROM, or other persistent storage medium.

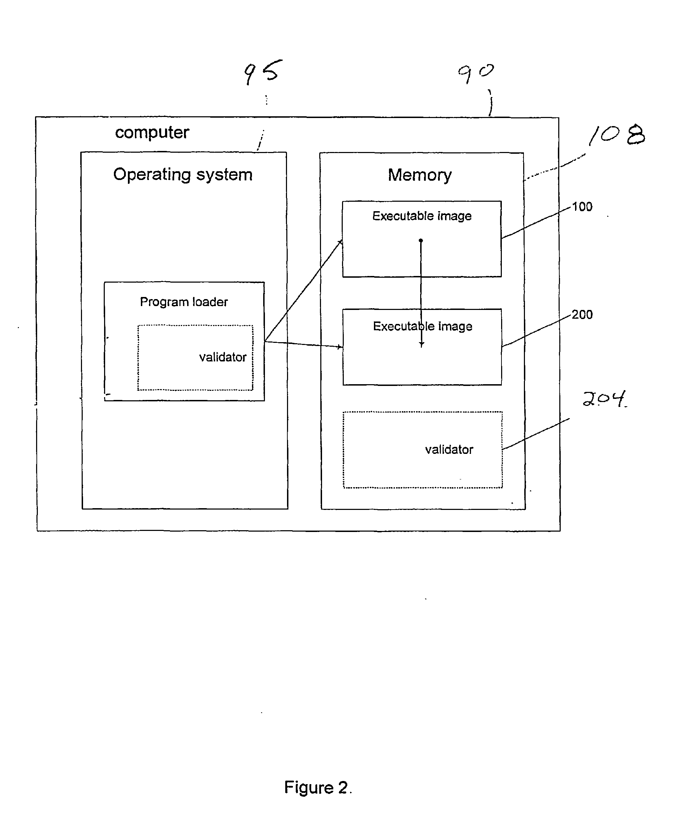

Figure 2 is a block diagram illustrating a validator 204. In one embodiment of the invention, the validator 204 is an executable image, similar in format to the executable image 100. In another embodiment of the invention, the validator 204 is integrated with the executable image 100. In yet another embodiment of the invention, the validator 204 is integrated with a program loader 208. One function of the program loader 208 is to copy an executable image 100 from the storage device 105 (Figure 1) to the memory 108 and to bind the code and data pointers to an appropriate address prior to the execution of the executable image 100. For convenience of description, the following description assumes that the validator 204 is a separate application that is distinct from the executable image 100 and the program loader 208.

The validator 204 verifies the authenticity of the executable image 100 under selected conditions which are described in further detail below. As can be appreciated by the skilled technologist, the validator 204 and the program loader 208 are comprised of various sub-routines, procedures, definitional statements, and macros that are typically separately compiled and linked into a single executable program. Therefore, the following description is used for convenience to describe the functionality of the these items.

The validator 204 and the program loader 208 (Figure 1) may be written in any programming language such as C, C++, BASIC, Pascal, Java, and FORTRAN. C, C++, BASIC, Pascal, Java, and FORTRAN are industry standard programming languages for which many commercial compilers and interpreters can be used to create executable code.

Figure 2 illustrates the executable image 100 after it has been connected to an executable image 200. It is noted that the executable image 200 can comprise the same types of data objects as described above with respect to the executable image 100. One function of the validator 204 is to verify the authenticity of the executable images, such as executable image 100 and executable image 200, after the executable images have been loaded into the memory 108.

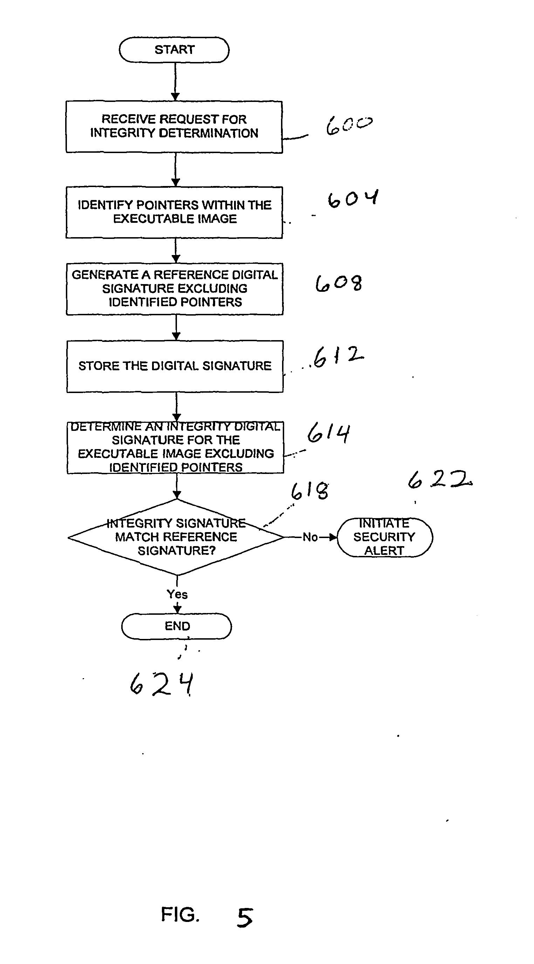

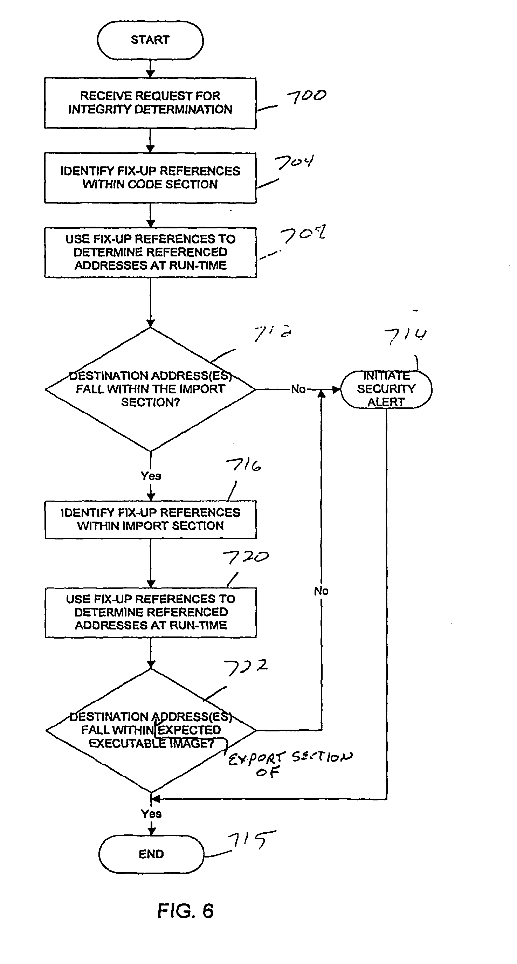

The process for verifying the authenticity of the executable images is set forth in detail with reference to Figure 5 and 6. However in brief, the validator 204 analyzes the executable image 100 before the executable image 100 is loaded into the memory 108 and generates a reference digital signature with respect to the executable image 100. After the executable image 100 is loaded, the validator 204 generates an authenticity digital signature to ensure that the executable image 100 has not been tampered with. In addition, the validator 204 examines the binding between the executable image 100 and the executable image 200 to ensure that binding between the executable image 100 has not been improperly re-directed to another executable image.

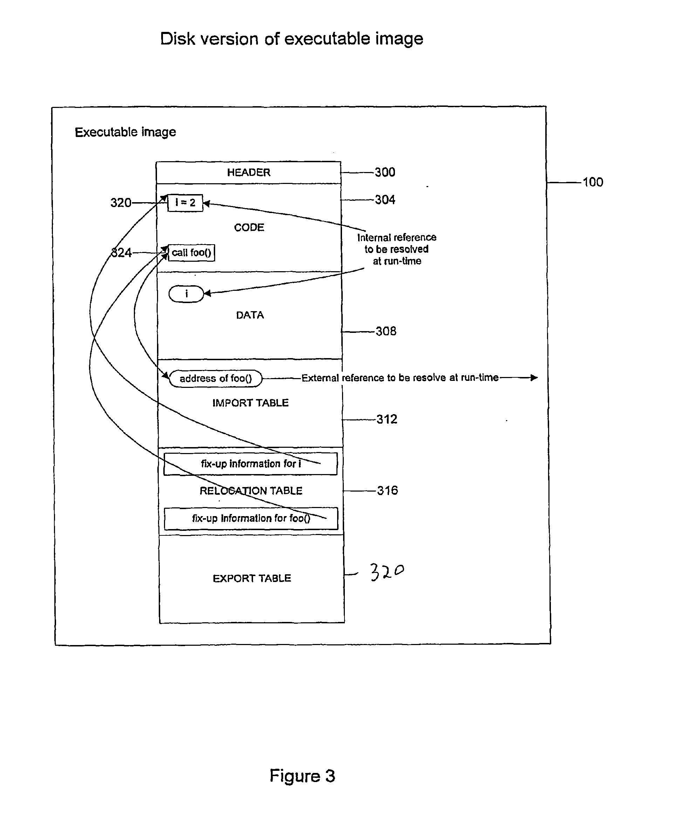

Figure 3 is a block diagram illustrating in further detail the internal structure of one embodiment of the executable image 100 that has been built as a dynamically linked library and which has been stored on the storage device 105 (Figure 1).

The executable image 100 includes a number of sections including a header section 300, code section 304, a data section 308, an import table 312, a relocation table 316, and an export table 320. It is also noted that executable image 100 includes a number of pointers that are described in further detail below. However, in general, a pointer is a reference that identifies a location within the memory 108 either absolutely with respect to the memory 108 (Figure 1) or relatively with respect to another location.

The header section 300 identifies the relative location of other sections and/or tables that are within the executable image 100. The code section 304 includes the compiled machine code for the executable image 100. For example, the code section 304 includes the machine instructions for the computer 90 (Figure 1). As is shown in Figure 3, the code section 304 includes instructions that reference other sections within the executable image 100 as well as without the executable image 100. As is shown by a block 320, the code section 304 includes instructions for the assignment of the number "2" to a global variable "i". However, the actual address of the variable "i" as stored on the storage device 105 (Figure 1) is not defined in the memory 108 since the executable image 100 has not yet been loaded into the memory 108 (Figure 1). Furthermore, the code section 304 includes an instruction to call a function foo(). The call to the procedure foo() includes an import pointer which references a location within the import table 312.

The data section 308 is used to store the contents of any global variables that are identified in the code section 304. The import table 312 includes various items of information to assist the program loader 208 (Figure 2) in connecting the executable image 100 to another executable image. The import table 312 includes: an identifier, such as a name, for each of the procedures that are maintained by other executable images, the name of the executable image, and one or more external pointers which reference the addresses of externally maintained procedures. The import table 312, as is stored on the storage device 105 (Figure 1), does not yet reference the memory address of the procedure foo().

The relocation table 316 identifies the position of each of the portions of the code section 304 that are in need of "fixing-up" upon the loading of the executable image 100. The term fixing-up as used herein refers to the process of modifying the executable image 100 in memory such that any unresolved pointers reference the appropriate data and/or code locations. After a pointer has been fixed-up by the program loader 208, it is said to be "bound" to a selected address.

The export table 320 identifies each of procedures that are made publicly available by the executable image 100. It is noted that the executable image 100 can include other information such as debug information or other tables to assist with the loading and/or linking process.

The validator 204 (Figure 2) determines a reference digital signature with respect to the executable image 100 as it is stored on the storage device 105. The process for generating the reference signature is described in further detail with respect to Figure 6. In one embodiment of the invention, the validator 204 determines the reference digital signature with respect to the entire executable image 100 excluding any pointers that are in need of fixing up by the program loader 208 (Figure 2). In another embodiment of the invention, the validator 204 determines a reference digital signature with respect to selected sections, such as the code section 304 and/or the import table 312 of the executable image 100 excluding any of the addresses that are in need of fixing up by the program loader 208.

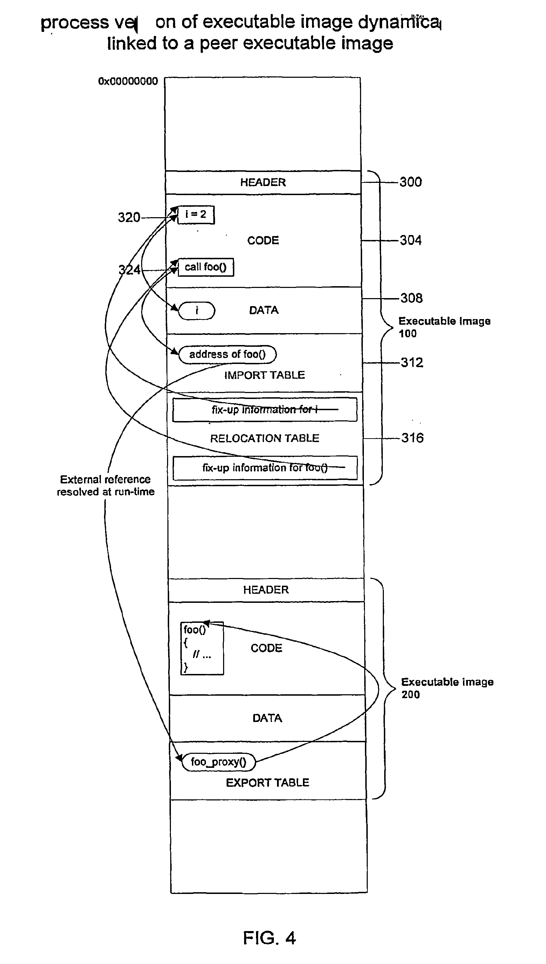

Figure 4 is a block diagram illustrating the executable image 100 after it is has been fixed-up with respect to the executable image 200. As can be seen by inspection of Figure 4, a data pointer for the variable "i" has been bound to an address in the data section 308 according to the fix-up information contained within the relocation table 316. Further, an external pointer in the import table 312 has been bound to an export table in the executable image 200. An export pointer at the referenced address in the export table of the second executable image 200 has been bound to the actual location of the procedure foo( that resides within the executable image 200.

After being fixed-up, the validator 204 (Figure 2) performs various authenticity checks with respect to the executable image 100. Each of these authenticity checks are described in further detail with respect to Figure 5 and 6. However, in summary, the validator 204 performs the following described functions.

First, the validator 204 determines an authenticity digital signature with respect to the same addresses that were used to generate the reference digital signature. If the authenticity digital signature differs from the reference digital signature, the validator 204 (Figure 2) assumes that the executable image 100 has been tampered with.

Second, the validator 204 examines each of the bindings in the import table 312 to ensure the addresses which are referenced by the import table have not been tampered with. If the import table 312 is improperly modified, a procedure call to a selected function could be rerouted to an untrusted routine other than the routine intended by the provider of the executable image 100.' Such an untrusted routine could accidentally or deliberately return false or other injurious data to the executable image 100.

Figure 5 is a flowchart illustrating a process for verifying the authenticity of the executable image 100. Starting at a state 600, the validator 204 (Figure 2) receives a request for determining the authenticity of the executable module 100 (Figure 1). In one embodiment of the invention, the request is generated by the program loader 208. In another embodiment of the invention, the request is generated by the operating system 95 (Figure 1). In yet another embodiment of the invention, the request is generated by an executable image (not shown) executing on the computer 90 (Figure 1). In yet another embodiment of the invention, the request is generated by a routine in the validator 204.

Continuing to a state 604, the validator 204 (Figure 2) identifies each of the pointers within the executable image 100 that are in need of fixing-up. In one embodiment of the invention, if the authenticity of only selected sections in the executable image 100 are to be determined, the validator 204 identifies only those pointers that fall within the selected sections of the executable image 100. For example, the validator 204 can be configured to identify only those pointers that fall within the code section 304 (Figure 3) or the import table 312 (Figure 3).

In one embodiment of the invention, the validator 204 parses the relocation table 316 to identify each of these pointers (Figure 3). As discussed above with reference to Figure 3, the relocation table 316 identifies the location of an address relative to the base of the executable image 100. By examining the relocation table 316, the validator 204 can identify which portions of code section 304 are modified by the program loader 208 during loading.

Continuing to a state 608, the validator 204 (Figure 2) generates a reference digital signature with respect to the executable image 100 (Figure 1). A digital signature as used herein is defined to include any methodology for identifying the contents of a selected set of data. In its simplest form, a digital signature can include a complete copy of the selected set of data that is to be signed. However, the digital signature can also include the results of a hashing function that has been applied to the selected set of data. Further, a digital signature can be a digital certificate. It is to be appreciated by the skilled technologist that one of any of a number of standard hashing functions may be used to generate the reference digital signature.

Still referring to the state 608, in one embodiment of the invention, the validator 204 determines the reference digital signature based upon the contents of the entire executable image 100 excluding any addresses that are in need of fixing-up by the program loader 208 (Figure 2). In another embodiment of the invention, the validator 204 determines a reference digital signature based upon the content of selected sections, such as the code section 304 and/or the import table 312 excluding any of the addresses that are in need of fixing-up by the program loader 208.

Proceeding to a state 612, the validator 204 (Figure 2) stores the reference digital signature for later retrieval. In one embodiment of the invention, the validator 204 stores the reference digital signature in the storage device 105 (Figure 1). In another embodiment of the invention, the validator 204 stores the reference digital signature in a selected section of the executable image 100, such as a resource table (not shown). In yet another embodiment of the invention, the reference digital signature is appended to the executable image 100. In yet another embodiment of the invention, the reference digital signature is stored in a database, a web server, or on the network 122 (Figure 1). In yet another embodiment of the invention, the reference digital signature is created before the executable image 100 is provided to the computer 90. In this embodiment, the reference digital signature can be generated in any of the above described ways.

Next, at a state 614, the validator 204 (Figure 2) determines an authenticity signature of the executable image 100 after or before the executable image 100 has been loaded by the program loader 208 into the memory 108 (Figure 2). At this step, the validator 204 reapplies the hashing function that was applied by the validator 204 during the state 608. The validator 204 can be configured to determine the authenticity digital signature upon the occurrence of one or more selected conditions, such as: the expiration of a timer, an authenticity self test of the executable image 100, an idle time of the computer 90 (Figure 1), or upon a request of the executable image 100.

Continuing to a decision state 618, the validator 204 (Figure 2) determines whether the reference digital signature (generated in the state 608) matches the authenticity digital signature (generated in the state 614). If the reference digital signature does not match the authenticity digital signature, the validator 204 proceeds to a state 622, wherein the validator 204 initiates a security alert. At the state 622, the validator 204 may perform a plurality of functions such as: unload the executable image 100, load a new copy of the executable image 100 from the storage 105 (Figure 1) to the memory 108 (Figure 1), load a new version of the executable image 100 from the network 122, delete the executable image 100 from the storage 105, display a warning to a user residing at the computer 90 (Figure 1), transmit an error message to a remote computer (not shown) via the network 122, or undo one or more actions performed by the executable image 100.

Referring again to the decision state 618, if the validator 204 (Figure 2) determines that the reference digital signature matches the authenticity digital signature, the validator 204 proceeds to an end state 624. Depending on the embodiment, the validator 204 (Figure 2) may return to the state 614 to re-determine the authenticity digital signature upon the occurrence of the selected conditions.

Figure 6 is a flowchart illustrating another process performed by the validator 204 of Figure 2 during an authenticity check of one of the executable images shown in Figure 2. The process performed by Figure 6 is distinct from the process performed by Figure 5 and can be performed in isolation or in conjunction with the processes performed by Figure 5. In particular, Figure 6 illustrates a process for verifying that each of the pointers in the executable image are bound to a proper location. The following text describes an authenticity check process with respect to import pointers in the code section 304 and export pointers in the import table 312 of the executable image 100. However, it is to be appreciated by the skilled technologist, that a similar process can be employed with respect to other types of pointers in the executable image 100.

Starting at a state 700, the validator 204 (Figure 2) receives a request from a requestor for determining the authenticity of the executable module 100 (Figure 1). In one embodiment of the invention, the requestor is the program loader 208 (Figure 2). In another embodiment of the invention, the requestor is the operating system 95 (Figure 1). In yet another embodiment of the invention, the requestor is an executable image (not shown) executing on the computer 90 (Figure 1). In yet another embodiment of the invention, the requestor is a routine within the validator 204. Further, the request can be initiated by one of the requestors upon the occurrence of one or more selected conditions which include: the expiration of a timer, the detection of an idle time with respect to the computer 90 (Figure 1), and/or before the execution of a critical action, such as a bank transaction.

Continuing to a state 704, the validator 204 (Figure 2) identifies each of the import pointers in the code section 304. In one embodiment of the invention, the validator 204 parses the relocation table 316 to identify each of these import pointers (Figure 3).

Next, at a state 708, the validator 204 (Figure 2) examines each of the import pointers in the code section 320 to determine whether each of the import pointers are bound to locations that are within the import table 312. At this state, in one embodiment of the invention, the validator 204 reads the header 300 to determine the begin and end address of the import table 312.

If each of the import pointers are not bound to a location that is within the import table 312 (Figure 3), the validator 204 (Figure 2) proceeds to a state 714 wherein the validator 204 initiates a security alert. At the state 714, the validator 204 may perform a plurality of functions such as: unload the executable image 100, load a new copy of the executable image 100 from the storage 105 (Figure 1) to the memory 108 (Figure 1), load a new copy of the executable image 100, delete the executable image 100 from the storage 105, display a warning to a user residing at the computer 90 (Figure 1), transmit an error message to a remote computer (not shown) via the network 122, or undo one or more actions performed by the executable image 100. The process flow moves to an end state 715 and ends.

Referring again to the decision state 712, if the validator 204 (Figure 2) determines that each of the import pointers within the code section 304 are bound to the import table 312 (Figure 3), the validator 204 proceeds to a state 716. At the state 716, the validator 204 identifies each of the external pointers in the import table 312.

Proceeding to a state 720, the validator 204 (Figure 2) determines the binding locations of the external pointers in the import table 312 (Figure 2). In one embodiment of the invention, the validator 204 stores the binding locations in an external pointer table (not shown) which is maintained by the validator 204.

Continuing to a decision state 722, the validator 204 determines whether the binding locations of the external pointers reside within one of the executable images identified by the import table 312 (Figure 2). For convenience of description, the executable images identified by the import table 312 are collectively referred to as the exporting executable images.

In one embodiment of the invention, the validator 204 calls the operating system 95 (Figure 1) to determine the locations of the exporting executable images within the memory 108 (Figure 1). For example, Windows 95 provides a procedure call named "GetModuleHandle()" which returns the base address of an executable image given the name of the executable image. Using the base address, the validator 204 can identify locations of the header as well as the other sections of the exporting executable images.

Still referring to the state 722, if the validator 204 determines that each of the external pointers are not bound to the exporting executable images, the validator 204 proceeds to the state 714 which is described in further detail above. However, if the validator 204 determines that each of the external pointers are bound to the exporting executable images, the validator 204 proceeds to the end state 715 and ends.

Advantageously, the present invention allows for static, dynamic, and run-time verification of the authenticity of executable images and does not require changes to either the source or the object code of an executable image. The present invention ensures that an executable image is authentic and has not been tampered with after it has loaded. After a reference digital signature is determined, the validator 204 can subsequently generate an authenticity digital signature to ensure that the data object has not been modified. Further, the validator 204 can determine whether each of the pointers in the executable image have been bound to a correct location.

For example, with respect to a data pointer in the code section 304, the validator 204 can check the relocation table 316 to ensure that the data pointer references a location within the data section 308. Further, for example, with respect to an external pointer in the import table 312, the validator 204 can ensure that the external pointer references a trusted executable image, the name of which is included in the import table 312. Since the name of the executable image is not modified by the program loader 208 (Figure 2), the validator 204 can ensure as well that the name of a trusted executable image has not changed by the use the reference and authenticity digital signatures.

While the above detailed description has shown, described, and pointed out novel features of the invention as applied to various embodiments, it will be understood that various omissions, substitutions, and changes in the form and details of the device or process illustrated may be made by those skilled in the art without departing from the spirit of the invention. The scope of the invention is indicated by the appended claims rather than by the foregoing description. All changes which come within the meaning and range of equivalency of the claims are to be embraced within their scope.

## Claims

1. A system for determining the authenticity of a program image (100) having one or more pointers that are in need of fixing up by a program loader (208), the system comprising a validator (204) arranged to:
generate at a first point in time a reference digital signature based upon a selected content of the program image (100); and
generate at a second point in time an authenticity digital signature based on said selected content of the program image, wherein the validator is further arranged to compare the reference digital signature with the authenticity digital signature to determine the authenticity of the program image,
**characterised in that** said selected content of the program image excludes each pointer located within said content that is in need of fixing up by a program loader.

2. A system as claimed in Claim 1, wherein the reference digital signature is storable within the program image.

3. A system as claimed in Claim 1, wherein the reference digital signature is storable on a network.

4. A system as claimed in Claim 1, wherein the reference digital signature is storable in a database.

5. A system as claimed in Claim 1, wherein the reference digital signature is storable in the validator.

6. A system as claimed in any preceding claim, wherein the first point in time is prior to the program image (100) being processed by the program loader (208) and wherein the second point in time is subsequent to the program image (100) being processed by the program loader (208).

7. A system as claimed in any of Claims 1 to 5, wherein the first point in time is prior to the program image (100) being processed by the program loader (208) and wherein the second point in time is prior to the program image (100) being processed by the program loader (208).

8. A system as claimed in any of Claims 1 to 5, wherein the first point in time is subsequent to the program image (100) being processed by the program loader (208) and wherein the second point in time is subsequent to the program image (100) being processed by the program loader (208).

9. A system as claimed in any preceding claim, wherein the validator (204) generates a warning upon the determination that the reference digital signature does not match the authenticity digital signature.

10. A system as claimed in Claim 9, wherein the validator (204) generates the warning to a source of the program image (100) upon the determination that the reference digital signature does not match the authenticity digital signature.

11. A system as claimed in Claim 9, wherein the validator generates the warning to a source of the validator (204) upon the determination that the reference digital signature does not match the authenticity digital signature.

12. A system as claimed in any preceding claim, wherein the selected content comprises a code section and one or more of the pointers reference an import table (312) that is in the program image (100).

13. A system as claimed in any of Claims 1 to 11, wherein the selected content comprises an import table (312) and one or more of the pointers reference an address in another program image (100).

14. A system as claimed in any preceding claim, wherein the program image (100) has information specifying whether each of the pointers references locations that are within the program image; and
the validator (204) is arranged to be capable of determining whether each of the pointers references a respective location that is within the program image (100).

15. A system as claimed in Claim 14, wherein the pointers reference an import table that is in the program image (100).

16. A system as claimed in Claim 14 or Claim 15, wherein the validator (204) generates a warning upon the determination that the pointers do not reference a location within the program image (100).

17. A system as claimed in Claim 16, wherein the validator (204) generates the warning to a source of the program image (100) upon the determination that the pointers do not reference a location within the program image.

18. A system as claimed in any of Claims 1 to 13, further comprising a second program image (200) that has a pointer in need of fixing up by a program loader, wherein if the pointers were fixed up the program image would be executable, wherein the pointer references a location within the first program image; and
the validator (204) is arranged to be capable of determining whether the pointer references a location within the first program image.

19. A system as claimed in Claim 18, wherein the validator (204) generates a warning upon the determination that the pointer does not reference a location within the first program image (100).

20. A system as claimed in Claim 19, wherein the validator (204) generates the warning to a provider of the program image (100) upon the determination that the pointer does not reference a location within the first program image.

21. A system as claimed in any of Claims 18 to 20, wherein the validator (204) determines whether the pointer references a location within the first program image by:
requesting from an operating system the base address of the first program image;
reading a pre-defined header that is in the beginning of the first program image, the header specifying a beginning and an end address for the first program image; and
determining whether the pointer references a location within the first program image as specified by the pre-defined header (300).

22. A system as claimed in any of Claims 18 to 21, wherein the second program image (200) includes:
an import table having an identifier of the first program image and one or more external pointers in need of fixing-up, each of the external pointers referencing a location within the first program image, and
a code section containing machine code and one or more import pointers in need of fixing-up, each of the import pointers referencing a location within the import tables.

23. A method of determining the authenticity of a program image having one or more pointers that are in need of fixing up by a program loader, the method comprising:
at a first point in time generating a first reference digital signature based upon a selected content of the program image,
at a second point in time generating an authenticity digital signature based upon said selected content of the program image; and
comparing the authenticity digital signature with the reference digital signature to determine the authenticity of the program image,
**characterised in that** the method further comprises:
identifying pointers within the program image (100) that are in need of fixing up by a program loader; wherein
the selected content of the program image excludes each pointer located within said content that is in need of fixing up by a program loader.

24. A method as claimed in Claim 23, additionally comprising generating a warning upon the determination that the authenticity digital signature does not match the reference digital signature.

25. A method as claimed in Claim 24, additionally comprising generating the warning to a provider of the program image upon the determination that the authenticity digital signature does not match the reference digital signature.

26. A method as claimed in Claim 25, wherein the selected content comprises a section of machine code.

27. A method as claimed in any of Claims 23 to 25, wherein the selected content comprises an import table that can reside in the program image.

28. A method as claimed in any of Claims 23 to 27, further comprising:
identifying one or more locations within a program image that has been loaded into a memory, each of the identified locations having a pointer in need of fixing-up that has been bound to a selected address in the memory by a program loader; and
determining whether each of the pointers at the identified locations reference a destination that is specified by the program image.

29. A method as claimed in Claim 28, wherein the destination is an address in an import table that can reside in the program image.

30. A method as claimed in Claim 28, wherein the destination is an address in another program image.

## Patentansprüche

1. System zur Bestimmung der Authentizität eines Programmbildes (100) mit einem oder mehreren Zeigern, die durch einen Programmlader (208) bearbeitet werden müssen, wobei das System einen Validierer (204) aufweist, der ausgestaltet ist, um:
zu einem ersten Zeitpunkt basierend auf einem ausgewählten Inhalt des Programmbildes (100) eine digitale Referenzsignatur zu erzeugen; und
zu einem zweiten Zeitpunkt basierend auf dem ausgewählten Inhalt des Programmbildes eine digitale Authentizitätssignatur zu erzeugen, wobei der Validierer außerdem ausgestaltet ist, um die digitale Referenzsignatur mit der digitalen Authentizitätssignatur zu vergleichen, um die Authentizität des Programmbildes zu bestimmen,
**dadurch gekennzeichnet, dass** der ausgewählte Inhalt des Programmbildes jeden sich in dem Inhalt befindlichen Zeiger ausschließt, der durch einen Programmlader bearbeitet werden muss.

2. System nach Anspruch 1, bei dem die digitale Referenzsignatur in dem Programmbild speicherbar ist.

3. System nach Anspruch 1, bei dem die digitale Referenzsignatur auf einem Netzwerk speicherbar ist.

4. System nach Anspruch 1, bei dem die digitale Referenzsignatur in einer Datenbank speicherbar ist.

5. System nach Anspruch 1, bei dem die digitale Referenzsignatur in dem Validierer speicherbar ist.

6. System nach einem der vorhergehenden Ansprüche, bei dem der erste Zeitpunkt vor der Verarbeitung des Programmbildes (100) durch den Programmlader (208) liegt, und bei dem der zweite Zeitpunkt hinter der Verarbeitung des Programmbildes (100) durch den Programmlader (208) liegt.

7. System nach einem der Ansprüche 1 bis 5, bei dem der erste Zeitpunkt vor der Verarbeitung des Programmbildes (100) durch den Programmlader (208) liegt, und bei dem der zweite Zeitpunkt vor der Verarbeitung des Programmbildes (100) durch den Programmlader (208) liegt.

8. System nach einem der Ansprüche 1 bis 5, bei dem der erste Zeitpunkt hinter der Verarbeitung des Programmbildes (100) durch den Programmlader (208) liegt, und bei dem der zweite Zeitpunkt hinter der Verarbeitung des Programmbildes (100) durch den Progranunlader (208) liegt.

9. System nach einem der vorhergehenden Ansprüche, bei dem der Validierer (204) eine Warnung erzeugt, wenn bestimmt wurde, dass die digitale Referenzsignatur nicht mit der digitalen Authentizitätssignatur übereinstimmt.

10. System nach Anspruch 9, bei dem der Validierer (204) die Warnung für eine Quelle des Programmbildes (100) erzeugt, wenn bestimmt wurde, dass die digitale Referenzsignatur nicht mit der digitalen Authentizitätssignatur übereinstimmt.

11. System nach Anspruch 9, bei dem der Validierer die Warnung für eine Quelle des Validierers (204) erzeugt, wenn bestimmt wurde, dass die digitale Referenzsignatur nicht mit der digitalen Authentizitätssignatur übereinstimmt.

12. System nach einem der vorhergehenden Ansprüche, bei dem der ausgewählte Inhalt einen Code-Abschnitt sowie einen oder mehrere der Zeiger enthält, die sich auf eine Importtabelle (312) beziehen, die sich in dem Programmbild (100) befindet.

13. System nach einem der Ansprüche 1 bis 11, bei dem der ausgewählte Inhalt eine Importtabelle (312) sowie einen oder mehrere der Zeiger enthält, die sich auf eine Adresse in einem anderen Programmbild (100) beziehen.

14. System nach einem der vorhergehenden Ansprüche, bei dem das Programmbild (100) Informationen enthält, die spezifizieren, ob sich jeder der Zeiger auf Positionen bezieht, die sich in dem Programmbild befinden; und
der Validierer (204) ausgestaltet ist, um bestimmen zu können, ob sich jeder der Zeiger auf eine jeweilige Position bezieht, die sich in dem Programmbild (100) befindet.

15. System nach Anspruch 14, bei dem sich die Zeiger auf eine Importtabelle beziehen, die sich in dem Programmbild (100) befindet.

16. System nach Anspruch 14 oder Anspruch 15, bei dem der Validierer (204) eine Warnung erzeugt, wenn bestimmt wurde, dass sich die Zeiger nicht auf eine Position in dem Programmbild (100) beziehen.

17. System nach Anspruch 16, bei dem der Validierer (204) die Warnung für eine Quelle des Programmbildes (100) erzeugt, wenn bestimmt wurde, dass sich die Zeiger nicht auf eine Position in dem Programmbild beziehen.

18. System nach einem der Ansprüche 1 bis 13, außerdem mit einem zweiten Programmbild (200), das einen Zeiger hat, der durch einen Programmlader bearbeitet werden muss, wobei dann, wenn die Zeiger bearbeitet sind, das Programmbild ausführbar ist, wobei sich der Zeiger auf eine Position in dem ersten Programmbild bezieht; und
der Validierer (204) ausgestaltet ist, um bestimmen zu können, ob sich der Zeiger auf eine Position in dem ersten Programmbild bezieht.

19. System nach Anspruch 18, bei dem der Validierer (204) eine Warnung erzeugt, wenn bestimmt wurde, dass sich der Zeiger nicht auf eine Position in dem ersten Programmbild (100) bezieht.

20. System nach Anspruch 19, bei dem der Validierer (204) die Warnung für einen Provider des Programmbildes (100) erzeugt, wenn bestimmt wurde, dass sich der Zeiger nicht auf eine Position in dem ersten Programmbild bezieht.

21. System nach einem der Ansprüche 18 bis 20, bei der der Validierer (204) bestimmt, ob sich der Zeiger auf eine Position in dem ersten Programmbild bezieht, durch:
Anfragen der Basisadresse des ersten Programmbildes von einem Betriebssystem;
Lesen einer zuvor definierten Kopfzeile, die sich am Anfang des ersten Programmbildes befindet, wobei die Kopfzeile eine Anfangs- und eine Endadresse für das erste Programmbild spezifiziert; und
Bestimmen, ob sich der Zeiger auf eine Position in dem ersten Programmbild bezieht, wie durch die zuvor definierten Kopfzeile (300) spezifiziert.

22. System nach einem der Ansprüche 18 bis 21, bei dem das zweite Programmbild (200) enthält:
eine Importtabelle mit einem Identifizierer des ersten Programmbildes sowie einem oder mehreren externen Zeigern, die bearbeitet werden müssen, wobei sich jeder der externen Zeiger auf eine Position in dem ersten Programmbild bezieht, und
einen Code-Abschnitt, der einen Maschinencode sowie einen oder mehrere Importzeiger enthält, die bearbeitet werden müssen, wobei sich jeder der Importzeiger auf eine Position in den Importtabellen bezieht.

23. Verfahren zur Bestimmung der Authentizität eines Programmbildes mit einem oder mehreren Zeigern, die durch einen Programmlader bearbeitet werden müssen, wobei das Verfahren umfasst:
Erzeugen einer ersten digitalen Referenzsignatur basierend auf einem ausgewählten Inhalt des Programmbildes zu einem ersten Zeitpunkt,
Erzeugen einer digitalen Authentizitätssignatur basierend auf dem ausgewählten Inhalt des Programmbildes zu einem zweiten Zeitpunkt; und
Vergleichen der digitalen Authentizitätssignatur mit der digitalen Referenzsignatur, um die Authentizität des Programmbildes zu bestimmen,
**dadurch gekennzeichnet, dass** das Verfahren außerdem umfasst:
Identifizieren von Zeigern in dem Programmbild (100), die durch einen Programmlader bearbeitet werden müssen;
wobei der ausgewählte Inhalt des Programmbildes jeden sich in dem Inhalt befindlichen Zeiger ausschließt, der durch einen Programmlader bearbeitet werden muss.

24. Verfahren nach Anspruch 23, außerdem mit dem Erzeugen einer Warnung, wenn bestimmt wurde, dass die digitale Authentizitätssignatur nicht mit der digitalen Referenzsignatur übereinstimmt.

25. Verfahren nach Anspruch 24, außerdem mit dem Erzeugen der Warnung für einen Provider des Programmbildes, wenn bestimmt wurde, dass die digitale Authentizitätssignatur nicht mit der digitalen Referenzsignatur übereinstimmt.

26. Verfahren nach Anspruch 25, wobei der ausgewählte Inhalt einen Abschnitt des Maschinencodes enthält.

27. Verfahren nach einem der Ansprüche 23 bis 25, bei dem der ausgewählte Inhalt eine Importtabelle enthält, die sich in dem Programmbild befinden kann.

28. Verfahren nach einem der Ansprüche 23 bis 27, außerdem mit:
Identifizieren von einer oder mehreren Positionen in einem Programmbild, das in einen Speicher geladen wurde, wobei jede der identifizierten Positionen einen Zeiger hat, der bearbeitet werden muss der durch einen Programmlader an eine ausgewählte Adresse in dem Speicher gebunden ist; und
Bestimmen, ob sich jeder der Zeiger an den identifizierten Positionen auf einen Ort bezieht, der durch das Programmbild spezifiziert ist.

29. Verfahren nach Anspruch 28, bei dem der Ort eine Adresse in einer Importtabelle ist, die sich in dem Programmbild befinden kann.

30. Verfahren nach Anspruch 28, bei dem der Ort eine Adresse in einem anderen Programmbild ist.

## Revendications

1. Système destiné à déterminer l'authenticité d'une image de programme (100) ayant un ou plusieurs pointeurs qui ont besoin d'être arrangés par un chargeur de programme (208), le système comprenant un validateur (204) agencé pour :
générer, à un premier point dans le temps, une signature numérique de référence basée sur un contenu choisi de l'image de programme (100) ; et
générer, à un deuxième point dans le temps, une signature numérique d'authenticité basée sur ledit contenu choisi de l'image de programme, le validateur étant en outre agencé pour comparer la signature numérique de référence avec la signature numérique d'authenticité pour déterminer l'authenticité de l'image de programme,
**caractérisé en ce que** ledit contenu choisi de l'image de programme exclut chaque pointeur situé à l'intérieur dudit contenu qui a besoin d'être arrangé par un chargeur de programme.

2. Système selon la revendication 1, dans lequel la signature numérique de référence est mémorisable à l'intérieur de l'image de programme.

3. Système selon la revendication 1, dans lequel la signature numérique de référence est mémorisable sur un réseau.

4. Système selon la revendication 1, dans lequel la signature numérique de référence est mémorisable dans une base de données.

5. Système selon la revendication 1, dans lequel la signature numérique de référence est mémorisable dans le validateur.

6. Système selon l'une quelconque des revendications précédentes, dans lequel le premier point dans le temps est avant le traitement de l'image de programme (100) par le chargeur de programme (208) et dans lequel le deuxième point dans le temps est après le traitement de l'image de programme (100) par le chargeur de programme (208).

7. Système selon l'une quelconque des revendications 1 à 5, dans lequel le premier point dans le temps est avant le traitement de l'image de programme (100) par le chargeur de programme (208) et dans lequel le deuxième point dans le temps est avant le traitement de l'image de programme (100) par le chargeur de programme (208).

8. Système selon l'une quelconque des revendications 1 à 5, dans lequel le premier point dans le temps est après le traitement de l'image de programme (100) par le chargeur de programme (208) et dans lequel le deuxième point dans le temps est après le traitement de l'image de programme (100) par le chargeur de programme (208).

9. Système selon l'une quelconque des revendications précédentes, dans lequel le validateur (204) génère un avertissement lors de la détermination que la signature numérique de référence ne concorde pas avec la signature numérique d'authenticité.

10. Système selon la revendication 9, dans lequel le validateur (204) génère l'avertissement adressé à la source de l'image de programme (100) lors de la détermination que la signature numérique de référence ne concorde pas avec la signature numérique d'authenticité.

11. Système selon la revendication 9, dans lequel le validateur génère l'avertissement adressé à la source du validateur (204) lors de la détermination que la signature numérique de référence ne concorde pas avec la signature numérique d'authenticité.

12. Système selon l'une quelconque des revendications précédentes, dans lequel le contenu choisi comprend une section de code et un ou plusieurs des pointeurs font référence à une table d'importation (312) qui est dans l'image de programme (100).

13. Système selon l'une quelconque des revendications 1 à 11, dans lequel le contenu choisi comprend une table d'importation (312) et un ou plusieurs des pointeurs font référence à une adresse dans une autre image de programme (100).

14. Système selon l'une quelconque des revendications précédentes, dans lequel l'image de programme (100) comporte de l'information spécifiant si chacun des pointeurs fait référence à des emplacements qui sont à l'intérieur de l'image de programme, et
le validateur (204) est agencé pour être capable de déterminer si chacun des pointeurs fait référence à un emplacement respectif qui est à l'intérieur de l'image de programme (100).

15. Système selon la revendication 14, dans lequel les pointeurs font référence à une table d'importation qui est dans l'image de programme (100).

16. Système selon la revendication 14 ou la revendication 15, dans lequel le validateur (204) génère un avertissement lors de la détermination que les pointeurs ne font pas référence à un emplacement à l'intérieur de l'image de programme (100).

17. Système selon la revendication 16, dans lequel le validateur (204) génère l'avertissement adressé à la source de l'image de programme (100) lors de la détermination que les pointeurs ne font pas référence à un emplacement à l'intérieur de l'image de programme.

18. Système selon l'une quelconque des revendications 1 à 13, comprenant en outre une seconde image de programme (200) qui a un pointeur qui a besoin d'être arrangé par un chargeur de programme, dans lequel, si les pointeurs ont été arrangés, l'image de programme sera exécutable, dans lequel le pointeur fait référence à un emplacement à l'intérieur de la première image de programme, et
le validateur (204) est agencé pour être capable de déterminer si le pointeur fait référence à un emplacement à l'intérieur de la première image de programme.

19. Système selon la revendication 18, dans lequel le validateur (204) génère un avertissement lors de la détermination que le pointeur ne fait pas référence à un emplacement à l'intérieur de la première image de programme (100).

20. Système selon la revendication 19, dans lequel le validateur (204) génère l'avertissement adressé au fournisseur de l'image de programme (100) lors de la détermination que le pointeur ne fait pas référence à un emplacement à l'intérieur de la première image de programme.

21. Système selon l'une quelconque des revendications 18 à 20, dans lequel le validateur (204) détermine si le pointeur fait référence à un emplacement à l'intérieur de la première image de programme :
en demandant à un système d'exploitation l'adresse de base de la première image de programme ;
en lisant un en-tête prédéfini qui est au début de la première image de programme, l'en-tête spécifiant une adresse de début et une adresse de fin pour la première image de programme ; et
en déterminant si le pointeur fait référence à un emplacement à l'intérieur de la première image de programme comme spécifié par l'en-tête prédéfini (300).

22. Système selon l'une quelconque des revendications 18 à 21, dans lequel la seconde image de programme (200) inclut :
une table d'importation ayant un identificateur de la première image de programme et un ou plusieurs pointeurs externes qui ont besoin d'être arrangés, chacun des pointeurs externes faisant référence à un emplacement à l'intérieur de la première image de programme ; et
une section de code contenant un code machine et un ou plusieurs pointeurs d'importation qui ont besoin d'être arrangés, chacun des pointeurs d'importation faisant référence à un emplacement à l'intérieur des tables d'importation.

23. Procédé de détermination de l'authenticité d'une image de programme ayant un ou plusieurs pointeurs qui ont besoin d'être arrangés par un chargeur de programme, le procédé comprenant :
à un premier point dans le temps, la génération d'une première signature numérique de référence basée sur un contenu choisi de l'image de programme ;
à un deuxième point dans le temps, la génération d'une signature numérique d'authenticité basée sur ledit contenu choisi de l'image de programme ; et
la comparaison de la signature numérique d'authenticité avec la signature numérique de référence pour déterminer l'authenticité de l'image de programme,
ledit procédé étant **caractérisé en ce qu'**il comprend en outre :
des pointeurs d'identification à l'intérieur de l'image de programme (100) qui ont besoin d'être arrangés par un chargeur de programme,
dans lequel le contenu choisi de l'image de programme exclut chaque pointeur situé à l'intérieur dudit contenu qui a besoin d'être arrangé par un chargeur de programme.

24. Procédé selon la revendication 23, comprenant en plus la génération d'un avertissement lors de la détermination que la signature numérique d'authenticité ne concorde pas avec la signature numérique de référence.

25. Procédé selon la revendication 24, comprenant en plus la génération de l'avertissement adressé au fournisseur de l'image de programme lors de la détermination que la signature numérique d'authenticité ne concorde pas avec la signature numérique de référence.

26. Procédé selon la revendication 25, dans lequel le contenu choisi comprend une section de code machine.

27. Procédé selon l'une quelconque des revendications 23 à 25, dans lequel le contenu choisi comprend une table d'importation qui peut résider dans l'image de programme.

28. Procédé selon l'une quelconque des revendications 23 à 27, comprenant en outre :
l'identification d'un ou plusieurs emplacements à l'intérieur d'une image de programme qui a été chargée dans une mémoire, chacun des emplacements identifiés ayant un pointeur qui a besoin d'être arrangé qui a été lié à une adresse choisie dans la mémoire par un chargeur de programme ; et
la détermination de ce que chacun des pointeurs aux emplacements identifiés fait ou non référence à une destination qui est spécifiée par l'image de programme.

29. Procédé selon la revendication 28, dans lequel la destination est une adresse dans une table d'importation qui peut résider dans l'image de programme.

30. Procédé selon la revendication 28, dans lequel la destination est une adresse dans une autre image de programme.
